# EUROPÄISCHE PATENTSCHRIFT

(11) **EP 4 377 112 B1**
(45) Veröffentlichungstag und Bekanntmachung des Hinweises auf die Patenterteilung: **23.09.2026**
(21) Anmeldenummer: 22757946.3
(22) Anmeldetag: 28.07.2022
(51) Int. Cl.: B60K 1/00, B62D 21/11

(54) **MODULARES BAUSATZSYSTEM ZUM UMRÜSTEN EINES FAHRANTRIEBS EINES KRAFTFAHRZEUGS VON EINEM VERBRENNUNGSMOTOR AUF EINEN ELEKTRISCHEN FAHRANTRIEB, DAFÜR VORGESEHENE TRÄGERSTRUKTUR, KRAFTFAHRZEUG MIT DEM BAUSATZSYSTEM UND UMRÜSTVERFAHREN**
MODULAR KIT SYSTEM FOR CONVERTING A TRACTION DRIVE OF A MOTOR VEHICLE FROM AN INTERNAL COMBUSTION ENGINE TO AN ELECTRIC TRACTION DRIVE, SUPPORT STRUCTURE PROVIDED THEREFOR, MOTOR VEHICLE HAVING THE KIT SYSTEM, AND CONVERSION METHOD
SYSTÈME D'ASSEMBLAGE MODULAIRE SERVANT À FAIRE PASSER UN SYSTÈME DE PROPULSION D'UN VÉHICULE À MOTEUR D'UN MOTEUR À COMBUSTION INTERNE À UN SYSTÈME DE PROPULSION ÉLECTRIQUE, STRUCTURE DE SUPPORT PRÉVUE À CET EFFET, VÉHICULE À MOTEUR ÉQUIPÉ DU SYSTÈME D'ASSEMBLAGE MODULAIRE ET PROCÉDÉ DE RÉÉQUIPEMENT

(30) Priorität: 28.07.2021 DE 102021119577
(43) Veröffentlichungstag der Anmeldung: 05.06.2024
(73) Patentinhaber: E-R3Volt GmbH, 85221 Dachau (DE)
(72) Erfinder: SCHOLLENBERGER, Ralf, 85609 Aschheim (DE)
(74) Vertreter: Hofstetter, Schurack & Partner
(86) Internationale Anmeldenummer: PCT/EP2022/071230
(87) Internationale Veröffentlichungsnummer: WO 2023/006892

(56) Entgegenhaltungen:
- WO-A1-2020/025859
- KR-A- 20200 011 712
- US-A1- 2019 263 449
- US-A1- 2021 129 915

## Beschreibung

Die Erfindung betrifft ein modulares Bausatzsystem zum Umrüsten eines Fahrantriebs eines Kraftfahrzeugs von einem Antrieb mit Verbrennungsmotor auf einen elektrischen Fahrantrieb. Zu der Erfindung gehören auch eine Trägerstruktur, die in dem Bausatzsystem verwendet werden kann, sowie ein Kraftfahrzeug mit elektrischem Fahrantrieb und ein Umrüstverfahren.

Bisher wurden PKW (Personenkraftwagen) als Verbrenner (Benziner/Diesel) entwickelt, gebaut und verkauft und sie wurden betrieben, bis sie nicht mehr wirtschaftlich zu betreiben waren. Die Nutzungsdauer von Fahrzeugen hat sich in den letzten Jahrzehnten deutlich verlängert (laut Studie des Instituts CAR Duisburg: 25% der Fahrzeuge in Deutschland sind älter als 15 Jahre; das Durchschnittsalter liegt bei 9,6 Jahre). Viele der heutigen Fahrzeuge sind vom technischen Stand länger fahrbar als noch vor einigen Jahren, die Dauerhaltbarkeit oder der Rostschutz ist deutlich verbessert worden. Somit können Karosserie, Fahrwerk oder Anbauteile problemlos weiterverwendet werden.

Eine Umrüstung von Verbrennern in Elektrofahrzeuge (EVs) findet aktuell fast exklusiv mit älteren Fahrzeugen (vor ca. Baujahr 2005) ohne Berücksichtigung der bestehenden Elektronik, im speziellen der Fahrerassistenz-Systeme (ADAS - Advanced driver-assistance system), statt. Nachteil ist hier, dass ältere Fahrzeuge bei regelmäßiger Nutzung eine geringere zu erwartende Restnutzungsdauer haben und sich von daher bei vielen Fahrzeugen die Umrüstung nicht mehr lohnen würde.

Nachteil bei den aktuellen Umrüstansätzen ist zudem, dass man fahrzeugindividuell die Befestigung und Anordnung der neuen elektrischen Antriebskomponenten immer neu entwickeln/ausprobieren muss. Diese Anpassung an andere Fahrzeuge ist zeitlich aufwändig. Zudem muss jeweils eine separate individuelle Abnahme durch einen technischen Prüfdienst (z.B. TÜV) stattfinden, um eine Fahrzulassung für das umgerüstete Kraftfahrzeug zu erhalten, was mit entsprechendem zeitlichem und finanziellem Aufwand verbunden ist.

Die WO 2020/025859 A1 offenbart ein modulares System umfassend mehrere Module zum Überführen eines Fahrzeugs mit Verbrennungsmotor in ein Elektrofahrzeug. Die Module werden in Aussparungen in der Struktur des Fahrzeugs integriert.

Die US 2019/263449 A1 offenbart einen wiederverwendbaren Bausatz zum Überführen eines Fahrzeugs mit Verbrennungsmotor und einem Leiterrahmen (H-Frame chassis) in ein Elektrofahrzeug.

Die US 2021/129915 A1 offenbart eine Plattform, auf der Systeme für einen elektrischen Antrieb montiert und installiert werden und die in ein Fahrzeug integriert wird, um das Fahrzeug mit Verbrennungsmotor in ein Elektrofahrzeug zu überführen.

Der Erfindung liegt die Aufgabe zugrunde, ein Kraftfahrzeug, das einen Verbrennungsmotor aufweist, in ein rein elektrisch angetriebenes Kraftfahrzeug (Elektrofahrzeug) umzurüsten.

Als Lösung stellt die Erfindung die Gegenstände der unabhängigen Patentansprüche bereit. Vorteilhafte Weiterbildungen dieser Lösungen sind durch die Unteransprüche, die folgende Beschreibung sowie die Figuren beschrieben.

Als einen Aspekt umfasst die Erfindung ein modulares Bausatzsystem zum Umrüsten eines Fahrantriebs eines Kraftfahrzeugs von einem Antrieb mit Verbrennungsmotor auf einen elektrischen Fahrantrieb.

Das Bausatzsystem (Umrüstbausatz) ist dafür vorgesehen, bei einem Kraftfahrzeug nach dem Ausbau oder Entfernen des Verbrennungsmotors den freiwerdenden Motorraum mit einem elektrischen Fahrantrieb auszustatten. Das Bausatzsystem ist dabei insofern modular, als dass es in Einzelteilen oder Komponenten bereitgestellt wird, aus denen eine Auswahl getroffen werden kann, um eine bestimmte oder spezifische Antriebsvariante des elektrischen Fahrantriebs zu bilden. Als Kraftfahrzeug kann hiermit beispielsweise ein Personenkraftwagen umgerüstet werden, wobei andere Beispiele noch im Folgenden beschrieben werden.

Das Bausatzsystem umfasst hierzu:
- eine mechanische Trägerstruktur mit einer mechanischen Verbindungsschnittstelle zum Befestigen der Trägerstruktur in einem Motorraum des Kraftfahrzeugs anstelle des Verbrennungsmotors, und
- elektrische Bestückungskomponenten zum Bestücken der Trägerstruktur, wobei eine jeweilige Kombination zumindest einiger der Bestückungskomponenten insgesamt die besagte jeweilige Antriebsvariante des elektrischen Fahrantriebs ergibt.

Die Trägerstruktur kann hierbei eine Halterung oder ein Gerüst darstellen, also ein Standardanbaumodul, an welchem die ausgewählten Bestückungskomponenten aus dem Bausatzsystem angebracht oder befestigt werden können. Die mechanische Verbindungsschnittstelle ist in den Verbindungsbereichen, wo eine Berührung mit den Wänden des Motorraums oder Chassis vorgesehen ist, bevorzugt in derselben Weise ausgestaltet wie der Verbrennungsmotor, der zuvor im Motorraum angeordnet war. Hierzu kann für unterschiedliche Chassistypen oder Karosserietypen von Kraftfahrzeugen jeweils eine entsprechend ausgestaltete Trägerstruktur mit passender Verbindungsschnittstelle für diesen Karosserietyp oder Chassistyp bereitgestellt sein (z.B. pro unterstützte Fahrzeugbaureihe eine passende Trägerstruktur). Mechanisch verhält sich also die Trägerstruktur im Motorraum wie der Verbrennungsmotor, wenn es um das Verbinden der Trägerstruktur mit dem Kraftfahrzeug geht. An die Trägerstruktur werden zum Bilden einer bestimmten oder ausgewählten Antriebsvariante des elektrischen Fahrantriebs dann die entsprechend notwendigen Bestückungskomponenten angebracht oder befestigt. Solche Bestückungskomponenten können, wie im Weiteren noch beschrieben werden wird, eine elektrische Maschine sein und eine Leistungselektronik für eine elektrische Maschine sein.

Die Trägerstruktur weist entsprechende Bestückungsplätze zum Befestigen jeweils einer der Bestückungskomponenten in und/oder an der Trägerstruktur auf. Der jeweilige Bestückungsplatz ist dabei jeweils in Bezug auf eine Form und/oder eine Befestigungseinrichtung korrespondierend mit einer Form und/oder einer Befestigungseinrichtung eines Befestigungsbereichs (z.B. Bodenbereich, Seitenbereich) der zugehörigen Bestückungskomponente, für die der jeweilige Befestigungsplatz vorgesehen ist, ausgestaltet. Mit anderen Worten ist also für diejenigen Bestückungskomponenten, die an der Trägerstruktur befestigt werden sollen, ein jeweiliger, passender Bestückungsplatz an der Trägerstruktur vorgesehen. Es kann auch ein Bestückungsplatz für zwei oder mehrere Bestückungskomponenten ausgestaltet sein, wobei dann jeweils nur eine davon zurzeit an dem Bestückungsplatz angeordnet werden kann. Hierdurch lassen sich alternative Antriebsvarianten mittels der Trägerstruktur platzsparend bilden. Die Form des Bestückungsplatzes ist insofern an die zugehörige oder dafür vorgesehene Bestückungskomponente angepasst, als dass beispielsweise eine Aufstandsfläche des Bestückungsplatzes zu einem Boden oder einer Wand der daran anzuordnenden Bestückungskomponente passt, indem beispielsweise die beiden aneinander anzulegenden Flächen (des Bestückungsplatzes und der Bestückungskomponente) flach sind. Als Befestigungseinrichtung kann an einen Bestückungsplatz beispielsweise eine Schraubverbindung (Schraubgewinde, Bohrung) und/oder eine Schnalle und/oder Schelle zum Verspannen und/oder eine Rastverbindung vorgesehen sein, um eine Bestückungskomponente am Bestückungsplatz zu befestigen. Von einer jeweiligen Bestückungskomponente können insbesondere mehrere unterschiedliche Komponentenmodelle (beispielsweise unterschiedliche elektrische Maschinenmodelle) vorgesehen sein, aus denen dann ein Benutzer ein Komponentenmodell auswählen kann, das in der Trägerstruktur eingebaut werden soll, um eine bestimmte Antriebsvariante zu erhalten.

Durch die Erfindung ergibt sich der Vorteil, dass beim Umrüsten eines Kraftfahrzeugs auf einen elektrischen Fahrantrieb durch eine standardisierbare Trägerstruktur und einen begrenzten Komponentensatz an Bestückungskomponenten ein standardisierter Umbauprozess mit geprüften Komponenten vorgenommen oder ermöglicht wird, so dass Kraftfahrzeuge auf Grundlage des Bausatzsystems umgerüstet werden können, ohne dass anschließend eine Einzelfallprüfung für jedes Kraftfahrzeug vorgenommen werden muss. Stattdessen kann erreicht werden, dass eine Typprüfung und/oder Zulassung für das Bausatzsystem ausreichen kann, um zulässige umgerüstete Kraftfahrzeuge zu erhalten. Die Trägerstruktur und die Bestückungskomponenten lassen sich gemäß den Standards der KFZ-Technik entwickeln und herstellen und stellen somit im Voraus zugelassene Nachrüstbauteile für ein Kraftfahrzeug dar, was die Einzelfallprüfung erspart. Das Bausatzsystem ist insofern modular, als dass kein fertiger Nachrüstmotor als Ersatz für den Verbrennungsmotor geliefert oder bereitgestellt wird, sondern stattdessen die Trägerstruktur wahlweise mit unterschiedlichen Bestückungskomponenten bestückt werden kann, um unterschiedliche Antriebsvarianten zu erhalten.

Um einen elektrischen Fahrantrieb antreiben zu können, ist auch ein elektrischer Energiespeicher notwendig, insbesondere ein Hochvolt-Speicher für das Bereitstellen einer elektrischen Gleichspannung größer als 60 Volt, insbesondere größer als 100 Volt. Es kann sein, dass der Motorraum nicht ausreichend Platz bietet, um sowohl den elektrischen Fahrantrieb selbst als auch einen elektrischen Energiespeicher bereitzustellen. Die Erfindung umfasst hierzu, dass für einen Einbauraum eines Kraftstofftanks, im Bereich der bisherigen Abgasanlage, und/oder Reserveradmulde und/oder einen Kofferraum des Kraftfahrzeugs eine Energiespeichereinheit bereitgestellt ist, die Einbauplätze für Batteriemodule aufweist, wobei eine elektrische Anschlusseinrichtung oder Verbindungseinrichtung vorgesehen ist, die sowohl bei Vollbestückung als auch bei Teilbestückung der Einbauplätze der Energiespeichereinheit mit Batteriemodulen jeweils eine elektrische Verbindung zu dem elektrischen Fahrantrieb bereitstellt. Hier liegt die Erkenntnis zugrunde, dass durch Entfernen des Verbrennungsmotors auch der Kraftstofftank in dem Kraftfahrzeug überflüssig ist, so dass im Einbauraum des Kraftstofftanks zumindest ein Batteriemodul untergebracht oder eingebaut werden kann. Auch ein Kofferraum, insbesondere ein Fach für den Ersatz-Kanister, kann zum Unterbringen oder Lagern von Batteriemodulen genutzt werden. Die elektrische Verbindungseinrichtung, die hierzu vorgesehen ist, kann beispielsweise ein Gehäuse vorsehen, in welches die Batteriemodule eingebaut werden können. Indem die Verbindungseinrichtung variabel sowohl eine elektrische Verbindung bei Vollbestückung (alle vorgesehenen Einbauplätze für Batteriemodule sind in der Energiespeichereinheit belegt) als auch bei Teilbestückung bereitstellen kann, ist es möglich, zunächst eine Energiespeichereinheit mit geringerer Speicherkapazität (durch Teilbestückung der Einbauplätze) anzuschaffen und zu einem späteren Zeitpunkt, beispielsweise einige Monate später, dann weitere Batteriemodule hinzu zu kaufen, um die Vollbestückung oder eine erweiterte Teilbestückung zu erhalten. Die elektrische Verbindungseinrichtung kann beispielsweise flexible Kabel umfassen, um die Kabel an die eingebauten Batteriemodule heranführen zu können. Somit ist ein Nachkauf von Batteriemodulen möglich, die Energiespeichereinheit muss nicht vollständig bestückt sein.

Die Erfindung umfasst auch weitere Ausprägungen, durch die sich zusätzliche Vorteile ergeben.

Besonders vorteilhaft ist, wenn sich die Trägerstruktur ganz oder teilweise im Voraus bestücken lässt, also bevor die Trägerstruktur in den Motorraum eingesetzt wird. Dies vereinfacht die Montage. Auch die ganz oder teilweise bestückte Trägerstruktur lässt mit den bereits eingebauten oder angebauten Bestückungskomponenten in den Motorraum einführen, ohne dass es zu einem Verkanten aufgrund der Vorbestückung oder der vorbestückten Bestückungskomponenten kommt. Damit ist eine zumindest teilweise Vorbestückung der Trägerstruktur außerhalb des Kraftfahrzeugs möglich. Hierzu können die Bestückungsplätze für die entsprechenden Bestückungskomponenten entsprechend an der Trägerstruktur angeordnet oder platziert sein.

Um einen Verbrennungsmotor durch einen elektrischen Fahrantrieb zu ersetzen, sollten zusätzlich zu einer elektrischen Maschine auch weitere Bestückungskomponenten vorgesehen sein. Aber auch im Zusammenhang mit elektrischen Maschinen selbst kann zum Bereitstellen unterschiedlicher Antriebsvarianten vorgesehen sein, dass das Bausatzsystem mehrere unterschiedliche Maschinenmodelle aufweist. Somit ist von einem Maschinenmodell oder mehreren unterschiedlichen Maschinenmodellen jeweils zumindest eine elektrische Maschine bereitgestellt. Als unterschiedliche Maschinenmodelle wird hier verstanden, dass unterschiedliche Leistungsklassen und/oder unterschiedliche Technologien (beispielsweise Reluktanz/Synchron/Asynchron-Maschine) vorgesehen sind. Das Bausatzsystem kann also auf einem einzelnen Maschinenmodell oder auf mehreren unterschiedlichen Maschinenmodellen beruhen. Von jedem Maschinenmodell kann hierbei in der Trägerstruktur ein Bestückungsplatz oder es können aber auch mehrere Bestückungsplätze für den gleichzeitigen Betrieb mehrerer elektrischer Maschinen vorgesehen sein.

Des Weiteren ist zur Unterstützung oder zur Vervollständigung des elektrischen Fahrantriebs als Bestückungskomponente vorgesehen: von zumindest einem Aggregattyp jeweils zumindest ein Zusatzaggregat zum Betreiben der zumindest einen elektrischen Maschine. Der Begriff "Aggregattyp" drückt hierbei aus, dass unterschiedliche Zusatzaggregate notwendig sind, zum Beispiel kann als ein Aggregattyp jeweils vorgesehen sein: ein Stromrichter/Inverter, ein Klimakompressor, eine Unterdruckpumpe. Von jedem vorgesehenen Aggregattyp kann hierbei jeweils wiederum zumindest ein Zusatzaggregat vorgesehen sein, das heißt es kann ein Zusatzaggregat oder es können aber auch mehrere Zusatzaggregate vom selben Aggregattyp in der Trägerstruktur vorgesehen sein, die dann die eine oder mehrere elektrische Maschinen unterstützen und/oder von dieser angetrieben werden.

In Bezug auf die zusätzlich zu der elektrischen Maschine oder den elektrischen Maschinen vorgesehenen Zusatzaggregate sind insbesondere die folgenden Aggregattypen als relevant erkannt worden. Eine Weiterbildung umfasst hierzu, dass zumindest einer der folgenden Aggregattypen vorgesehen ist: eine Leistungselektronik (Stromrichter, Inverter), ein elektrischer Energiespeicher zum Speicher von Antriebsenergie, ein Ladegerät, ein Steuergerät, eine Unterdruckpumpe, eine Klimakompressor, ein Heizaggregat. Von jedem Aggregattyp ist bevorzugt auch jeweils vorgesehen, dass unterschiedliche Aggregatmodelle, beispielsweise unterschiedliche Invertermodelle für Stromrichter/Inverter und/oder unterschiedliche Klimakompressoren und/oder unterschiedliche Heizaggregate, vorgesehen sind, um in der Trägerstruktur unterschiedliche Antriebsvarianten mit unterschiedlicher Ausstattung für den Benutzer auswählbar oder generierbar zu machen. Zur Klarstellung sei hier noch einmal betont, dass der "Aggregattyp" unterschiedliche Funktionen beschreibt, also beispielsweise die Aggregattypen Stromrichter einerseits und Klimakompressor andererseits. Für jeden Aggregattyp können dann ein oder mehrere "Aggregatmodelle" vorgesehen sein, also dieselbe Funktion in unterschiedlicher Ausführung, beispielsweise vom Aggregattyp "Stromrichter" unterschiedlicher Aggregatmodelle, die sich in der Leistungsklasse (beispielsweise 40 kW, 60 kW, 100 kW) unterscheiden.

In und/oder an der Trägerstruktur ist für jedes Maschinenmodell und für jeden Aggregattyp entsprechend jeweils zumindest ein Bestückungsplatz bereitgestellt, wobei insbesondere unterschiedliche Maschinenmodelle als jeweilige Alternative für unterschiedliche Antriebsvarianten zum alternativen Bestücken vorgesehen sind. Insofern sind also die Trägerstruktur und die Bestückungskomponenten aufeinander abgestimmt, als dass bei Auswahl einer Bestückungskomponente sichergestellt ist, dass für diese auch ein entsprechender Bestückungsplatz, der in Bezug auf die Form und/oder die Befestigungseinrichtung auf diese Bestückungskomponente abgestimmt ist oder mit dieser korrespondiert. Beispielsweise können entsprechende Bohrungen zum Einsetzen von Schrauben und/oder Rastelemente für Rastverbindungen aufeinander abgestimmt sein. Sind mehrere unterschiedliche Maschinenmodelle vorgesehen, aus denen ein Benutzer ein Maschinenmodell für eine spezifische Antriebsvariante auswählen kann, so können entsprechend unterschiedliche alternative Bestückungen durch entsprechende Bestückungsplätze unterstützt oder vorgesehen werden. Beim Bestücken der Trägerstruktur gibt es also bevorzugt eine eindeutige Anordnung für die Bestückungskomponenten, die durch die Bestückungsplätze vorgegeben ist. Die macht die Montage prozesssicher.

In Bezug auf die Befestigung der Trägerstruktur im Motorraum ist die bereits beschriebene mechanische Verbindungsschnittstelle vorgesehen. Diese sieht bevorzugt vor, dass sich die Trägerstruktur mechanisch in derselben Weise im Motorraum befestigen lässt, wie der zuvor ausgebaute Verbrennungsmotor, das heißt die Verbindungsschnittstelle der Trägerstruktur bildet die Verbindungsschnittstelle des Verbrennungsmotors nach. Eine Weiterbildung umfasst hierzu, dass die mechanische Verbindungsschnittstelle der Trägerstruktur einer mechanischen Verbindungsschnittstelle für einen vorbestimmten Karosserietyp des Kraftfahrzeuges entspricht, indem die Verbindungsschnittstelle insbesondere Verbindungselemente für zumindest ein Motorlager und/oder zumindest eine Motorlagerstrebe und/oder zumindest einen Hydromount aufweist. Insbesondere ist vorgesehen, dass die Trägerstruktur für einen vorbestimmten Karosserietyp ausgelegt ist, also beispielsweise von einem vorgegebenen Hersteller ein vorgegebenes Fahrzeugmodell oder eine Baureihe, wie es beispielsweise durch eine Baureihenbezeichnung identifiziert werden kann. Dadurch sind entsprechende Anbindungspunkte für den Verbrennungsmotor und/oder zumindest ein anderes Teil, beispielsweise die so genannte Lichtmaschine (Generator) definiert. Weist dann die Verbindungsschnittstelle der Trägerstruktur für dieselben Anbindungspunkte oder einige dieser Anbindungspunkte ebenfalls die entsprechende Geometrie und eine Befestigungsmöglichkeit, beispielsweise Schraubenlöcher, auf, so ergibt sich der Vorteil, dass durch Entfernen des Verbrennungsmotors und Einsetzen der Trägerstruktur die Steifigkeit der Karosserie des Kraftfahrzeugs erhalten bleibt.

Allerdings muss nicht nur die Trägerstruktur an das Kraftfahrzeug angebunden werden, sondern auch bei zumindest einer Bestückungskomponente kann vorgesehen sein, dass diese mit einer im Kraftfahrzeug verbliebenen Bestandskomponente, die nicht zusammen mit dem Verbrennungsmotor ausgebaut wurde, mechanisch und/oder elektrisch verbunden werden muss. Eine Weiterbildung umfasst hierzu, dass von zumindest einem Adaptertyp jeweils zumindest ein Adapter zum mechanischen und/oder elektrischen Anpassen zumindest einer der Bestückungskomponenten an eine jeweilige vorbestimmte Bestandskomponente des Kraftfahrzeugs vorgesehen ist. Beispielsweise kann vorgesehen sein, dass ein Adapter in dem Bausatzsystem bereitgestellt wird, um die Welle einer elektrischen Maschine mit einem Flansch eines Schaltgetriebes des Kraftfahrzeugs zu verbinden. Für unterschiedliche Getriebe kann jeweils ein Adaptermodell dieses Adaptertyps (Verbindung Welle zu Flansch) vorgesehen werden.

Eine Weiterbildung umfasst, dass als Adaptertyp insbesondere zumindest einer der folgenden vorgesehen ist:
- ein Flansch zum Verbinden des elektrischen Fahrantriebs an ein Schaltgetriebe oder ein Automatikgetriebe des Kraftfahrzeugs und/oder
- ein elektrisches Abschlusselement zum Ersetzen einer zusammen mit dem Verbrennungsmotor entfernten elektrischen Komponente an einem Kabelende eines Kabels des Kraftfahrzeugs und/oder
- eine Simulationsschaltung hier evtl. rausnehmen da E-CAN-Modul? zum Simulieren einer mit dem Verbrennungsmotor entfernten elektrischen Komponente während eines Betriebs des elektrischen Fahrantriebs nach der Umrüstung und/oder
- ein Riemengetriebe zum Koppeln eines Klimakompressors mit der in der Trägerstruktur eingebauten elektrischen Maschine, und/oder
- ein Adapter zum Kühlsystem des Kraftfahrzeugs.

Ein Abschlusselement kann ein offenes Kabelende, das vom entfernten Verbrennungsmotor übriggeblieben ist oder von diesem abgetrennt wurde, verschließen. Ein Abschlusselement kann die in dem Kabel verlaufenden Drähte am Kabelende elektrisch gegeneinander isolieren, um so beispielsweise einen Kurzschluss zu vermeiden. Handelt es sich bei dem Kabel um eine Messleitung oder eine Signalleitung zum Übertragen eines elektrischen Signals, beispielsweise ein Koaxialkabel, so kann als Abschlusselement auch ein Abschlusswiderstand mit einem Widerstandswert, der beispielsweise dem Wellenwiderstand des Kabels entspricht, vorgesehen sein, also in einem Wertebereich von 5 Ohm bis 100 Ohm, um nur Beispiele zu nennen. Falls ein Klimakompressor als Bestandskomponente verwendet werden soll, so muss der Antrieb, der vom Verbrennungsmotor bereitgestellt wurde, dann durch die eingebaute elektrische Maschine ersetzt oder bereitgestellt werden, wozu ein passendes Riemengetriebe als Adapter vorgesehen sein kann. Mittels eines Adapters für ein Kühlsystem kann erreicht werden, dass Kühlflüssigkeit aus dem Kühlsystem des Kraftfahrzeugs in der elektrischen Maschine zum Kühlen beispielsweise des Stators, genutzt werden kann. Mittels einer Simulationsschaltung kann in dem Kraftfahrzeug einem Steuergerät, das als Bestandskomponente des Kraftfahrzeugs in diesem verblieben ist, durch eine Simulation die Gegenwart des Verbrennungsmotors weiter "vorgetäuscht" oder nachgebildet werden, um beispielsweise einen Drehzahlverlauf des Verbrennungsmotors mittels der Simulationsschaltung nachzubilden und zu signalisieren. Die Simulationsschaltung kann beispielsweise auf der Grundlage zumindest eines Mikroprozessors und/oder zumindest eines Mikrocontrollers realisiert werden. Die Simulation kann vorsehen, dass Betriebsdaten des elektrischen Fahrantriebs, beispielsweise eine Drehzahl einer elektrischen Maschine, auf simulierte Betriebsdaten des Verbrennungsmotors abgebildet werden, also z.B. eine Betriebstemperatur des elektrischen Fahrantriebs auf einen simulierten Temperaturwert des Verbrennungsmotors, eine Drehzahl des elektrischen Fahrantriebs auf eine simulierte Drehzahl des Verbrennungsmotors. Hierdurch kann in einer Bestandskomponente ein Algorithmus oder eine Schaltung in derselben Weise weiterbetrieben werden, wie es bei Nutzung oder bei Gegenwart des Verbrennungsmotors erfolgt ist, das heißt es muss keine Anpassung der Bestandskomponente an Signale des elektrischen Fahrantriebs erfolgen, da eine Umsetzung in korrespondierende Signale eines Verbrennungsmotors durch die Simulationsschaltung erfolgen kann.

In Bezug auf die Ausgestaltung der mechanischen Trägerstruktur kann beispielsweise durch ein durch die Bauweise eingestelltes Gewicht der Trägerstruktur erreicht werden, dass das Gesamtgewicht der bestückten Trägerstruktur (Trägerstruktur plus Bestückungskomponenten) beispielsweise dem Gesamtgewicht oder der Gesamtmasse des Verbrennungsmotors, insbesondere aller entfernten Vorgängerkomponenten des Verbrennungsantriebs, entspricht, zumindest in einem Bereich von 80 Prozent bis 120 Prozent der Masse, die der ausgebauten Masse des Verbrennungsmotors und/oder weiterer Vorgängerkomponenten (beispielsweise Lichtmaschine) entspricht. Hierdurch bleibt eine Lage des Schwerpunkts des Kraftfahrzeugs erhalten, was insbesondere die Fahrdynamik des Kraftfahrzeugs erhält.

Eine Weiterbildung umfasst, dass die Trägerstruktur vollständig oder teilweise als Gitterrahmen ("Käfig") mit einer Gitterstange oder mehreren Gitterstangen ausgestaltet ist. Ein Gitterrahmen weist den Vorteil auf, dass ein Wärmestau im Inneren der Trägerstruktur angeordneten Bestückungskomponenten vermieden ist, da Luft aus dem inneren Bestückungsraum frei nach außen strömen kann. Eine Gitterstruktur oder ein Gitterrahmen ermöglicht auch eine Gewichtsminimierung der Trägerstruktur, falls dies gewünscht ist. Die Bestückungsplätze für die Bestückungskomponenten können beispielsweise dadurch gebildet sein, dass im Gitterrahmen eine Platte zum Aufstellen einer jeweiligen Bestückungskomponente befestigt ist, beispielsweise durch Anschweißen oder durch Anschrauben. Allgemein kann ein Bestückungsplatz durch Vorsehen von zumindest einem Schraubenloch/Schraubgewinde, zumindest einer Schelle, zumindest einer Platte, zumindest eines Winkelprofils, zumindest eines Behälters oder Kastens, zumindest einer Schlaufe realisiert werden, um nur Beispiele zu nennen.

Zusätzlich zur Haltefunktion kann durch die Trägerstruktur auch erreicht werden, dass ein so genanntes Crash-Verhalten des Kraftfahrzeugs nach dem Austausch des Verbrennungsmotors durch die bestückte Trägerstruktur dennoch unverändert oder zumindest im Rahmen der gesetzlichen Vorgaben erhalten bleibt. Eine Weiterbildung umfasst hierzu, dass der Gitterrahmen zumindest eine gewölbte Stange und/oder zumindest eine Stange mit entlang ihrer Längserstreckungsrichtung veränderlich ausgestalteter Wandstärke und/ Durchmesser und/oder zumindest eine Stange mit einer strukturellen Schwächungsstelle aufweist. Mit anderen Worten kann vorgesehen sein, dass zumindest eine Stange nicht durchgehend die gleiche Stärke aufweist, sondern die Wandstärke und/oder der Durchmesser der Stange über der Längserstreckung variiert ist. Hierdurch kann für den zeitlichen Verlauf eines Crashs, beispielsweise in einem initialen Zeitraum, beispielsweise in den ersten 100 Millisekunden oder in den ersten 50 Millisekunden, das Stoßverhalten oder das Durchleiten eines Stoßes vom Kühlergrill hin beispielsweise zur Erfassungssensorik eines Airbag-Auslösesensors im Falle eines Frontalcrashs gestaltet oder vorbestimmt werden. Hierdurch kann dann sichergestellt werden, dass ein Airbag und/oder ein Gurtstraffer in derselben Weise während des Crashs ausgelöst wird, wie im Falle des eingebauten Verbrennungsmotors (insbesondere zum selben Zeitpunkt oder zu einem Zeitpunkt, der gemäß den gesetzlichen Regelungen vorgesehen ist). Um einen entsprechenden Gitterrahmen mit den beschriebenen Stangen oder zumindest einer solchen Stange zu entwickeln, können beispielsweise anhand von Crashtests mit Dummies Testreihen durchgeführt werden, um eine geeignete Anordnung und eine geeignete Form oder Ausgestaltung zumindest einer Stange zu ermitteln. Durch eine gewölbte Stange kann die entlang der Längserstreckungsrichtung übertragene Stoßkraft dadurch begrenzt werden, dass sich die Stange quer zur Stoßrichtung wölbt oder weiter verbiegt, wenn in einem Frontalcrash ein Stoß auf die Trägerstruktur wirkt. Eine nicht durchgehend gleiche Stärke und/oder das Vorsehen einer Schwächung kann sicherstellen, an welcher Stelle eine Stange als erstes bricht oder knickt, wenn die Stange in ihrer Längserstreckungsrichtung oder quer dazu mit einer vorbestimmten Mindestkraft belastet wird.

Eine elektrische Maschine kann einen anderen Drehmomentverlauf (Drehmoment über Drehzahl) entwickeln als ein Verbrennungsmotor. Um hier die mechanische Verbindungsschnittstelle der Trägerstruktur in Bezug auf die Kraftübertragung zu unterstützen, kann zumindest eine Momentenstütze an der Trägerstruktur ausgebildet sein. Eine Weiterbildung umfasst hierzu, dass sich bei der Trägerstruktur durch einen Bestückungsplatz für eine elektrische Maschine des elektrischen Fahrantriebs eine vorbestimmte, räumliche Ausrichtung einer Rotationsachse eines Rotors der elektrischen Maschine ergibt und die Trägerstruktur zumindest ein Abstützelement aufweist, das quer oder schräg zu dieser räumlichen Ausrichtung der Rotationsachse von der Trägerstruktur absteht, um als Momentenstütze im Motorraum aufzuliegen und/oder anzuliegen, z.B. am Chassis oder der Karosserie. Mit anderen Worten steht die Momentenstütze senkrecht oder zumindest in einem schrägen Winkel (Winkel größer als 0 Grad, insbesondere größer als 45 Grad) von der Richtung der Rotationsachse ab. Eine solche Momentenstütze kann als Abstützelement beispielsweise in Form eines Stutzens oder gewinkelten Blechs oder eines Horns an der Trägerstruktur ausgebildet sein oder von der Trägerstruktur abstehen. Das zumindest eine Abstützelement kann auf der angrenzenden Karosserie im Motorraum aufliegen oder anliegen, so dass bei einem Beschleunigungsvorgang oder auch im Falle einer Rekuperation bei einem Abbremsvorgang die vom Stator einer elektrischen Maschine ausgehende Momenten-Kraft über das zumindest eine Abstützelement in die Karosserie des Kraftfahrzeugs abgeleitet oder übertragen werden kann. Dies stützt die Trägerstruktur im Motorraum.

Um das erfindungsgemäße Bausatzsystem bereitstellen zu können, ist insbesondere die beschriebene Trägerstruktur notwendig.

Als einen weiteren Aspekt umfasst die Erfindung deshalb eine Trägerstruktur für eine Ausführungsform des beschriebenen Bausatzsystems. Die Trägerstruktur weist eine mechanische Verbindungsschnittstelle zum Befestigen der Trägerstruktur in einem Motorraum eines Kraftfahrzeugs, insbesondere eines Kraftfahrzeugs eines vorbestimmten Karosserietyps oder Chassistyps (Baureihe) auf. Zudem weist die Trägerstruktur Bestückungsplätze zum Befestigen jeweils einer Bestückungskomponente in und/oder an der Trägerstruktur auf. Der jeweilige Bestückungsplatz ist für die jeweilige Bestückungskomponente, für die der jeweilige Befestigungsplatz vorgesehen ist, jeweils zum Anlegen und/oder Einrasten der Bestückungskomponente geformt und/oder weist eine Befestigungseinrichtung zum Befestigen der Bestückungskomponente auf. Die Trägerstruktur kann in der beschriebenen Weise ausgestaltet sein, also z.B. zumindest teilweise als Gitterrahmen. Um die Bestückungsplätze dahingehend auszugestalten, dass eine Befestigungseinrichtung für eine jeweilige Bestückungskomponente, also beispielsweise für eine elektrische Maschine oder für eine Leistungselektronik (Inverter, Stromrichter) bereitzustellen, kann eine Schraubverbindung oder Schraubenlöcher, zumindest eine Schnalle, zumindest eine Schelle und/oder ein Rastelement für eine Rastverbindung vorgesehen sein, um nur Beispiele zu nennen.

Ein weiteres Problem beim Elektrifizieren eines Antriebs eines Kraftfahrzeugs zum Bereitstellen eines elektrischen Fahrantriebs mit Hochvolt-Speicher (größer als 60 Volt, insbesondere größer als 100 Volt) ist im Vergleich zu einem Kraftfahrzeug mit einem Verbrennungsmotor, das zugehörige Hochvoltkabel zum Führen des Stroms von der Energiespeichereinheit zur elektrischen Maschine. Das Hochvoltkabel sollte mit Rücksicht auf EMV (elektromagnetische Verträglichkeit) verlegt oder angeordnet werden. Eine Weiterbildung umfasst hierzu, dass in Trägerstruktur einen Verlegepfad für ein Hochvoltkabel und einen Verlegepfad für ein Datenkabel und/oder für ein Kabel einer Niedervoltkomponente aufweist, wobei die Verlegepfade durchgehend um einen Entstörabstand räumlich beabstandet angeordnet sind. Ein solcher Verlegepfad kann beispielsweise durch eine farbliche Markierung an der Trägerstruktur realisiert sein, die einem Monteur vorgibt, entlang welches Verlegepfads das Hochvoltkabel beziehungsweise das Datenkabel und/oder Kabel der Niedervoltkomponente (Niedervolt = elektrische Spannung kleiner als 60 Volt) verlegt werden muss. Hierbei kann ein Farbcode genutzt werden, wie er an sich beim Fahrzeugbau bekannt ist (beispielsweise Gelb für Airbag, Orange für Hochvolt). Zusätzlich oder alternativ zu einer farblichen Markierung kann der Verlegepfad durch beispielsweise zumindest eine Klemme und/oder zumindest eine Schelle zum Festlegen oder Befestigen des jeweiligen Kabels (Hochvoltkabel, Datenkabel, Kabel einer Niedervoltkomponente), vorgesehen sein. Der besagte Entstörabstand beträgt bevorzugt mindestens 1 cm, insbesondere mindestens 3 cm, insbesondere mindestens 5 cm, insbesondere mindestens 7 cm. Somit ist sichergestellt, dass elektromagnetische Störstrahlung aus dem Hochvoltkabel nur zu einem insignifikanten Anteil in ein Datenkabel und/oder ein Kabel einer Niedervoltkomponente eindringen kann.

Die Erfindung umfasst auch Weiterbildungen der Trägerstruktur, wie sie bereits im Zusammenhang mit der in den Weiterbildungen des erfindungsgemäßen Bausatzsystems beschrieben wurden, insbesondere das Bereitstellen von zumindest einer Momentenstütze.

Als einen weiteren Aspekt umfasst die Erfindung ein Kraftfahrzeug mit einem elektrischen Fahrantrieb aus dem Bausatzsystem, d.h. mit der beschriebenen Trägerstruktur im Motorraum. Das erfindungsgemäße Kraftfahrzeug zeichnet sich also insbesondere dadurch aus, dass es einen elektrischen Fahrantrieb, insbesondere einen rein elektrischen Fahrantrieb aufweist, wobei im Motorraum eben kein Verbrennungsmotor, sondern die beschriebene Trägerstruktur im bestückten Zustand, wenn also für eine spezifische Antriebsvariante entsprechende Bestückungskomponenten an der Trägerstruktur und/oder in der Trägerstruktur angeordnet sind, vorhanden ist. Eine besonders bevorzugte Ausführungsform sieht vor, dass der obere Bereich der Trägerstruktur einen Mindestabstand zur darüber angeordneten, geschlossenen Motorhaube aufweist, auch wenn die Trägerstruktur um Motorraum eingebaut und bestückt ist. Dieser Mindestabstand beträgt insbesondere mehr als 1 cm, bevorzugt mehr als 2 cm, er sollte dem entsprechen, was vorher vorhanden war, als der Verbrennungsmotor eingebaut war. Hierdurch ergibt sich ein effektiver Fußgängerschutz für den Fall, dass ein Fußgänger bei einem Zusammenstoß mit dem Oberkörper auf die Motorhaube aufprallt.

Das erfindungsgemäße Kraftfahrzeug ist bevorzugt als Kraftwagen, insbesondere als Personenkraftwagen oder Lastkraftwagen oder als Personenbus oder Motorrad oder als Landmaschine oder als Baumaschine ausgestaltet.

Die Montage des Kraftfahrzeugs bei Benutzung des Bausatzsystems ergibt ein Verfahren, das sich dadurch auszeichnet, dass ein Benutzer sich eine Antriebsvariante auf Grundlage des Bausatzsystems zusammenstellen kann und dann diese Antriebsvariante als Ersatz für einen Verbrennungsmotor in einem Kraftfahrzeug eingebaut werden kann. Hier ist zu beachten, dass man die Trägerstruktur passend zum Karosserietyp oder Chassistyp des Kraftfahrzeugs wählt, um die passende mechanische Verbindungsschnittstelle zu verwenden. Es kann also im Rahmen der Erfindung für unterschiedliche Karosserietypen oder Chassistypen jeweils eine Trägerstruktur oder allgemein ein Bausatzsystem mit der jeweils passenden Trägerstruktur bereitgestellt sein. Ein Benutzer kann dann darauf aufbauend aus dem Bausatzsystem die Bestückungskomponenten auswählen, je nach gewünschtem Modell, beispielsweise Nennleistung der elektrischen Maschine und/oder der Leistungselektronik, und/oder Ausstattung mit einem Klimakompressor, um nur Beispiele zu nennen. Dann erfolgen die Bestückung der Trägerstruktur und das Einsetzen in den Motorraum in der im Folgenden beschriebenen Weise.

Als einen weiteren Aspekt umfasst die Erfindung entsprechend ein Verfahren zum Umrüsten eines Kraftfahrzeugs mittels eines Bausatzsystems gemäß einem der vorhergehenden Ansprüche, umfassend die folgenden Schritte:
- in Abhängigkeit von einem Hersteller und/oder Chassistyp (Baureihe) des Kraftfahrzeugs Ermitteln des Bausatzsystems mit der für den Motorraum des Kraftfahrzeugs passenden Trägerstruktur,
- in Abhängigkeit von einer Benutzerauswahl einer Antriebsvariante Auswählen von Bestückungskomponenten für die ausgewählte Antriebsvariante aus dem Bausatzsystem,
- Bestücken der Trägerstruktur mit den ausgewählten Bestückungskomponenten, wobei das Bestücken durch Befestigen der ausgewählten Bestückungskomponenten an einem jeweiligen für sie vorgesehenen Bestückungsplatz an und/oder in der Trägerstruktur erfolgt,
- Entfernen zumindest des Verbrennungsmotors aus dem Motorraum des Kraftfahrzeugs,
- Einbauen der Trägerstruktur in den Motorraum anstelle des Verbrennungsmotors, wobei das Einbauen im unbestückten oder teilbestückten oder vollbestückten Zustand der Trägerstruktur erfolgt.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Weiterbildungen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung eines Kraftfahrzeugs, welches mittels einer Ausführungsform des erfindungsgemäßen Bausatzsystems auf einen elektrischen Fahrantrieb umgerüstet werden soll;
- Fig. 2: eine schematische Darstellung des Kraftfahrzeugs von Fig. 1 und eine Trägerstruktur des Bausatzsystems in einem teilbestückten Zustand;
- Fig. 3: eine schematische Darstellung des Kraftfahrzeugs während eines Einbaus der teilbestückten Trägerstruktur;
- Fig. 4: eine schematische Darstellung des Kraftfahrzeugs mit eingebauter Trägerstruktur während eines Einbaus weiterer Bestückungskomponenten;
- Fig. 5: eine schematische Darstellung des Kraftfahrzeugs mit einer resultierenden Antriebsvariante eines elektrischen Fahrantriebs, sodass das Kraftfahrzeug eine Ausführungsform des erfindungsgemäßen Kraftfahrzeugs darstellt;
- Fig. 6: eine schematische Darstellung der Ausführungsform des erfindungsgemäßen Kraftfahrzeugs in einer weiteren perspektivischen Ansicht;
- Fig. 7: eine schematische Darstellung einer Ausführungsform der erfindungsgemäßen Trägerstruktur in einer perspektivischen Rückansicht;
- Fig. 8: eine schematische Darstellung der Trägerstruktur in einer perspektivischen Ansicht von schräg unten in Bezug auf eine bestimmungsgemäße Einbaulage.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

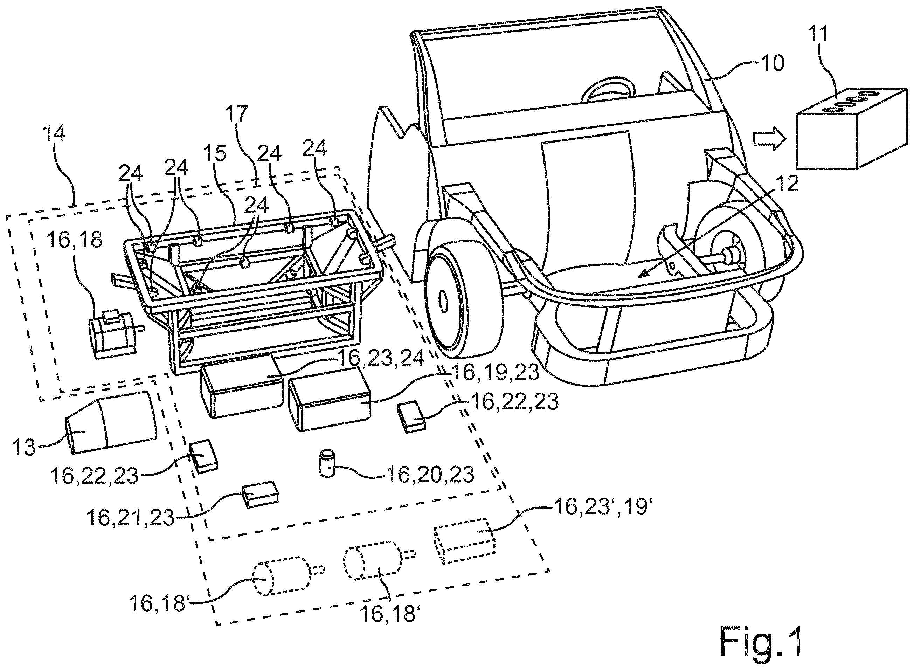

Fig. 1 zeigt ein Kraftfahrzeug 10, das beispielsweise ein Personenkraftwagen oder Lastkraftwagen sein kann. Das Kraftfahrzeug 10 hat einen Verbrennungsmotor 11 in einem Motorraum 12 aufgewiesen. In dem in Fig. 1 dargestellten Zustand ist der Verbrennungsmotor 11 ausgebaut worden, um im Motorraum 12 einen elektrischen Fahrantrieb anzuordnen, um so das Kraftfahrzeug 10 von einem Fahrantrieb mit Verbrennungsmotor 11 in ein Kraftfahrzeug 10 mit elektrischen Fahrantrieb umzurüsten. Zusätzlich zum Verbrennungsmotor 11 kann auch ein Getriebe 13 (z.B. eine Schaltgetriebe) ausgebaut worden sein, das in dem vorliegenden Beispiel aber auch für den elektrischen Fahrantrieb wiederverwendet werden soll.

Der elektrische Fahrantrieb kann auf der Grundlage eines modularen Bausatzsystems 14 gebildet werden, wie im Folgenden beschrieben wird.

Das Bausatzsystem 14 kann eine Trägerstruktur 15 und mehrere Bestückungskomponenten 16 umfassen, die alle als separate Elemente oder Bestandteile des Bausatzsystems 14 für einen Benutzer zur Auswahl bereitgestellt werden können. Beispielsweise kann der Benutzer mit dem Kraftfahrzeug 10 in eine Werkstatt fahren und dort aus dem Bausatzsystem 14 eine Auswahl 17 an Bestückungskomponenten 16 treffen, auf deren Grundlage der elektrische Fahrantrieb gebildet werden soll. Als eine jeweilige Bestückungskomponente 16 kann durch das Bausatzsystem 14 beispielsweise eine elektrische Maschine 18, eine Leistungselektronik 19, eine elektrische Heizeinrichtung 20, eine Simulatorschaltung 21 zum Simulieren einer elektrischen Komponente, die zusammen mit dem Verbrennungsmotor 11 ausgebaut worden ist, ein Steuergerät 22, um nur Beispiele zu nennen. Zu einem oder einigen oder jeder der Bestückungskomponenten 16 kann es in dem Bausatzsystem 14 für das Auswählen zumindest eine weitere Bestückungskomponente desselben Komponententyps, aber als unterschiedliches Modell geben. Beispielsweise kann zu der elektrischen Maschine zumindest ein weiteres Maschinenmodell 18' als Alternative für die Auswahl 17 bereitgestellt sein. Im Zusammenhang mit den anderen Bestückungskomponenten 16, die keine elektrische Maschine darstellen, sondern Zusatzaggregate 23, kann ebenfalls jeweils ein weiteres Zusatzaggregat 23' desselben Aggregatetyps, aber als unterschiedliches oder anderes oder alternatives Aggregatemodell vorgesehen sein. Beispielsweise ist in Fig. 1 dargestellt, dass zu der Leistungselektronik 19 als alternatives Zusatzaggregat 23' eine alternative Leistungselektronik 19' bereitgestellt sein kann, die der Benutzer anstelle der Leistungselektronik 19 in die Auswahl 17 aufnehmen kann. Die Trägerstruktur und die Bestückungskomponenten können einem Benutzer beispielsweise in einem Katalog in einer Werkstatt oder in einer Auswahlliste im Internet angeboten werden. Der Benutzer kann dann die Auswahln17 treffen und eine Werkstatt kann die ausgewählten Teile besorgen und die Umrüstung durchführen. Da es sich um standardisierte Nachrüstbauteile für Kraftfahrzeuge und einen standardisierten Einbauprozess (Anordnung der Trägerstruktur und der Bestückungskomponenten ist konstruktiv festgelegt) handeln kann, ist die Zulassung für den Straßenverkehr mit geringen Aufwand verbunden.

Die Trägerstruktur 15 kann mit den ausgewählten Bestückungskomponenten 16 aus der Auswahl 17 bestückt werden, um eine Antriebsvariante eines elektrischen Fahrantriebs zu erhalten. Damit muss nicht jede einzelne ausgewählte Bestückungskomponente 16 einzeln in den Motorraum 12 eingebaut werden, sondern es kann mittels der Trägerstruktur 15 in einer standardisierten Weise ein elektrischer Fahrantrieb zusammengesetzt und in den Motorraum 12 eingebaut werden. Damit lässt sich ein solcher elektrischer Fahrantrieb auch mit einer Zulassung versehen, die nicht für jedes einzelne umgebaute oder umgerüstete Kraftfahrzeug 10 in einer Einzelprüfung vergeben werden muss. Stattdessen kann für das Bausatzsystem 14 eine Zulassung erfolgen.

Das Bausatzsystem 14 kann Batteriemodule 25 zur Auswahl vorsehen, von denen in Fig. 1 repräsentativ nur eines dargestellt ist.

Beim oder nach dem Bestücken der Trägerstruktur 15 mit Bestückungskomponenten 16 kann zusätzlich sichergestellt werden, dass zumindest ein Hochvoltkabel einerseits und zumindest ein Datenkabel (für die Steuergeräte 22 und/oder die Simulatorschaltung 21), und/oder ein Niedervoltkabel ein geeigneter Verlegepfad 24 bereitgestellt ist, was beispielsweise in der in Fig. 1 dargestellten Weise durch Schellen oder Klemmen zum Befestigen oder Festlegen der Kabel vorgegeben werden kann.

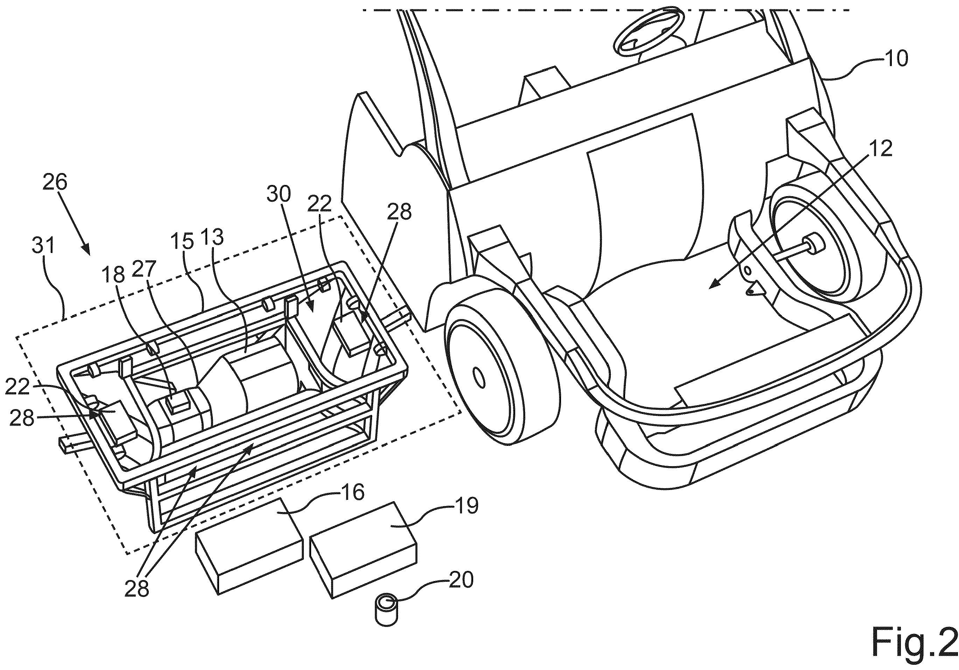

Fig. 2 veranschaulicht, wie der elektrische Fahrantrieb gebildet werden kann, indem zunächst die Trägerstruktur 15 in einen teilbestückten Zustand versetzt wird, bevor die Trägerstruktur 15 in den Motorraum 12 eingebaut wird. Durch das nur teilweise oder unvollständige Bestücken der Trägerstruktur 15 wird ein teilbestückter Zustand 26 erreicht. Somit kann also zumindest ein Teil der Montage des elektrischen Fahrantriebs außerhalb des Motorraums 12 erfolgen. Dargestellt ist, wie das wiederverwendete Getriebe 13 und die ausgewählte elektrische Maschine 18 verbunden und in die Trägerstruktur 15 eingesetzt sein können. Hierbei kann vorgesehen sein, dass ein Adapter 27 durch das Bausatzsystem 14 bereitgestellt ist, um die elektrische Maschine 18 beispielsweise an einen Flansch des Getriebes 13 zu befestigen. Wo innerhalb der Trägerstruktur 15 die elektrische Maschine 18 und/oder das Getriebe 13 zu befestigen sind, kann durch vorbereitete Bestückungsplätze 28 festgelegt oder vorgegeben sein, an denen beispielsweise passende Schraubenlöcher und/oder Befestigungselemente, wie beispielsweise Rastelemente für Rastverbindungen, in der Trägerstruktur 15 bereitgestellt sind.

Insbesondere ist vorgesehen, dass sich durch die Bestückungsplätze 28 für die Bestückungskomponenten 16 und den Verlegepfad 24 für das Hochvoltkabel einerseits und das Datenkabel und/oder Kabel einer Niedervoltkomponente andererseits eine reproduzierbare und/oder eindeutige Anordnung der jeweils ausgewählten Bestückungskomponente 16 ergibt.

Fig. 2 zeigt des Weiteren, dass in dem teilbestückten Zustand 26 durch die bereits eingebauten oder verbauten Bestückungskomponenten 16 aufgrund von den zugehörigen Bestückungsplätzen 28 erreicht ist, dass sich die Bestückungskomponenten lediglich in einen Innenraum oder innenliegenden Bestückungsraum 30 der Trägerstruktur 15 erstrecken, so dass die eingebauten oder verbauten Bestückungskomponenten nicht über eine Außenkontur 31 der Trägerstruktur 15 hinaus erstrecken.

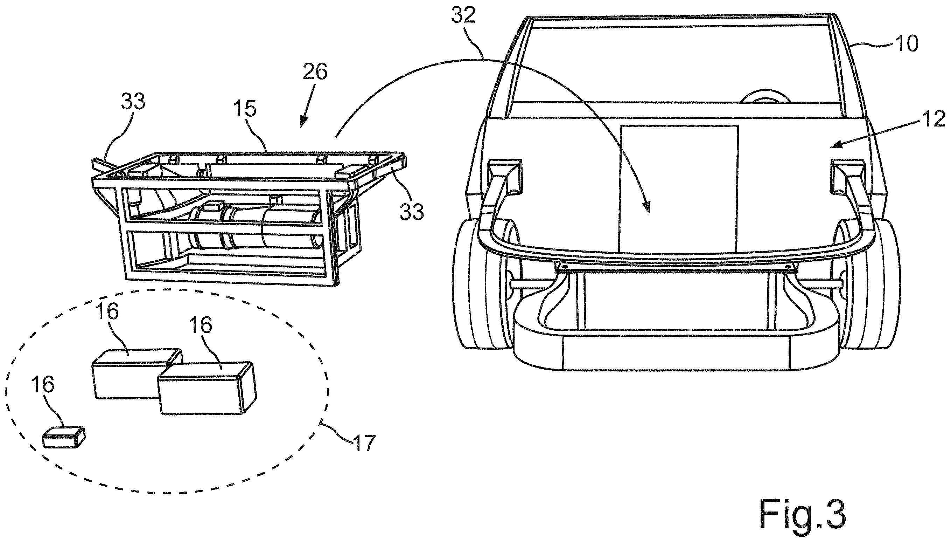

Fig. 3 veranschaulicht, wie die Trägerstruktur 15 im teilbestückten Zustand 26 in einem Einbauvorgang 32 in den Motorraum 12 des Kraftfahrzeugs 10 eingesetzt oder eingeführt werden kann. Weitere zum Bestücken vorgesehene Bestückungskomponenten 16 aus der Auswahl 17 können dann nachträglich eingebaut werden.

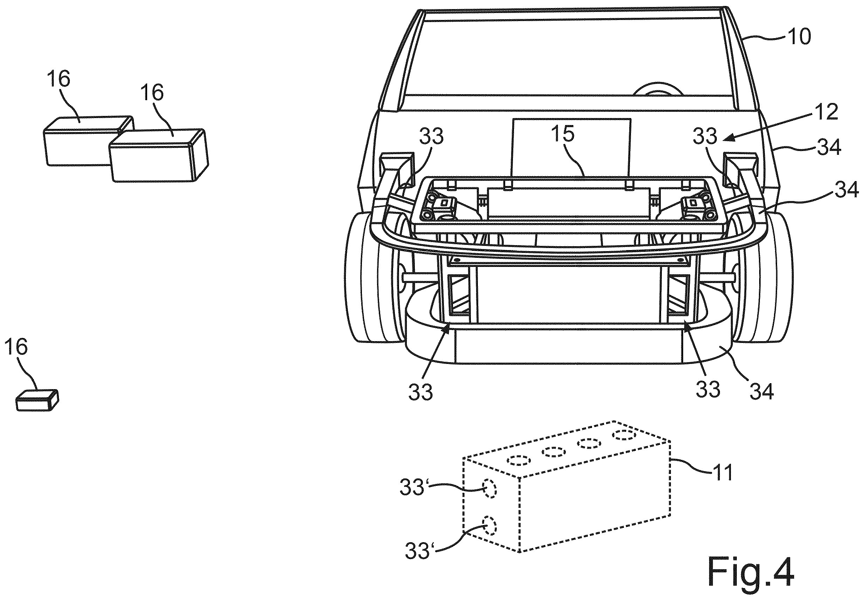

Fig. 4 veranschaulicht, wie die Trägerstruktur 15 im Motorraum 12 mittels einer mechanischen Verbindungsschnittstelle 33 im Motorraum 12 beispielsweise an einem Rahmen oder Chassis 34 des Kraftfahrzeugs 10 befestigt werden kann, beispielsweise indem die Verbindungsschnittstelle 33 für eine Schraubverbindung ausgelegt ist. Durch entsprechende Auswahl oder Abgleichen eines Modells der Trägerstruktur 15 mit einem Modell eines Karosserietyps oder einer Baureihe des Kraftfahrzeugs 10 kann erreicht werden, dass die mechanische Verbindungsschnittstelle 33 einer mechanischen Schnittstelle 33' des ausgebauten Verbrennungsmotors 11 entspricht, sodass die Trägerstruktur 15 an denselben Anbindungspunkten befestigt werden kann, die durch das Ausbauen des Verbrennungsmotors 11 freigeworden sind.

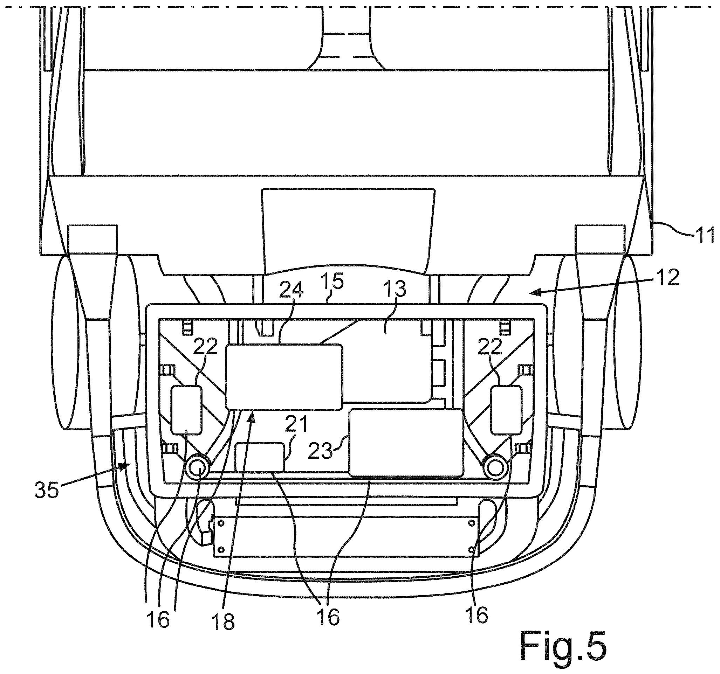

Fig. 5 veranschaulicht in einer Draufsicht, wie nach dem Einbau der Trägerstruktur 15 auch die restlichen Bestückungskomponenten 16 aus der Auswahl 17 in der Trägerstruktur 15 eingebaut werden kann, so dass diese schließlich einen vollbestückten Zustand 35 aufweist.

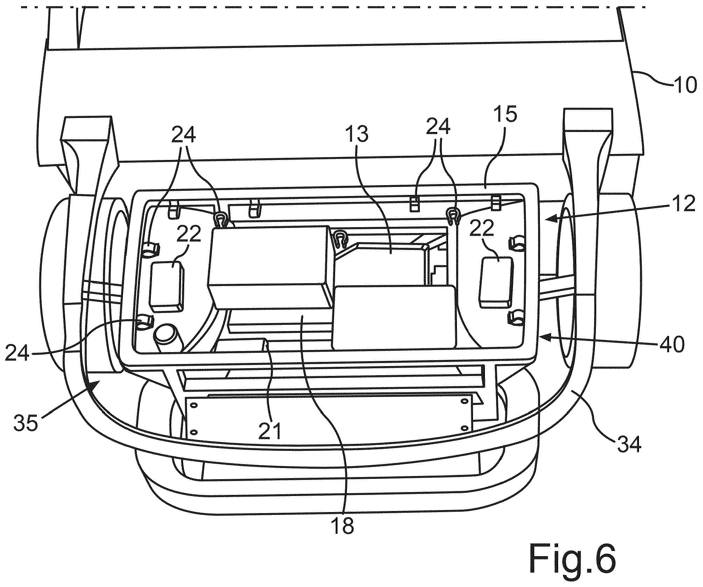

Fig. 6 veranschaulicht den vollbestückten Zustand 35 mit eingebauter vollbestückter Trägerstruktur 15 in einer Ansicht von schräg oben, so dass auch im Unterschied zur Fig. 5 die elektrische Maschine 18 im Verlegepfad 24 angeordnete Kabel sind der Übersichtlichkeit halber nicht dargestellt. Die Trägerstruktur 15 kann im eingebauten Zustand beispielsweise durch das Chassis 34 des Kraftfahrzeugs 10 umgeben sein. Das Kraftfahrzeug 10 stellt in diesem Zustand mit eingebauter vollbestückter Trägerstruktur 15 ein umgerüstetes Kraftfahrzeug 10 mit elektrischem Fahrantrieb 40 dar.

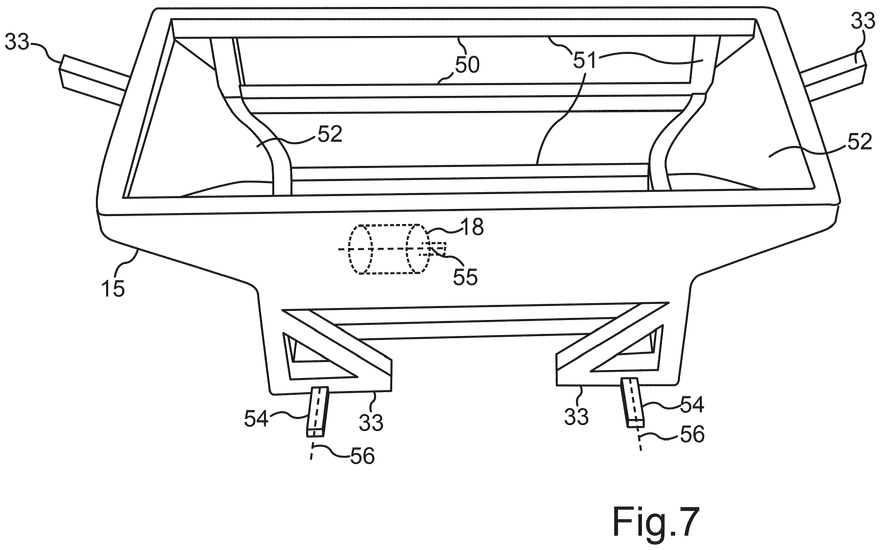

Fig. 7 veranschaulicht noch einmal die Trägerstruktur 15 mit der mechanischen Verbindungsschnittstelle 33. Die Trägerstruktur 15 kann auf einem Gitterrahmen 50 basieren, die durch Stangen 51 gebildet sein kann. Es können auch geschlossene Flächen 52 beispielsweise durch Bleche oder Kunststoffverschalungen gebildet sein, die einen Spritzschutz gegenüber beispielsweise den Rädern des Kraftfahrzeugs darstellen können. Die Trägerstruktur 15 kann zumindest ein Abstützelement 54 aufweisen, das quer oder senkrecht zu einer Ausrichtung einer Rotationsachse 55 der elektrischen Maschine 18 im eingebauten Zustand ausgerichtet ist, das heißt eine Längserstreckungsrichtung 56 des jeweiligen Abstützelements 54 kann quer oder senkrecht zur Rotationsachse 55 ausgerichtet sein. Das Abstützelement 54 kann beispielsweise als Stange oder Stab ausgestaltet sein. Mittels des Abstützelements 54 kann jeweils eine Momentenstütze für die elektrische Maschine 18 bereitgestellt sein. Die Stangen 51 können zum Festlegen eines Crash-Verhaltens der Trägerstruktur 15 im Kraftfahrzeug 10 gekrümmt ausgestaltet sein und/oder eine entlang einer jeweiligen Längserstreckungsrichtung der Stangen 51 variabel oder veränderlich ausgestaltete Dicke und/oder Wandstärke aufweisen.

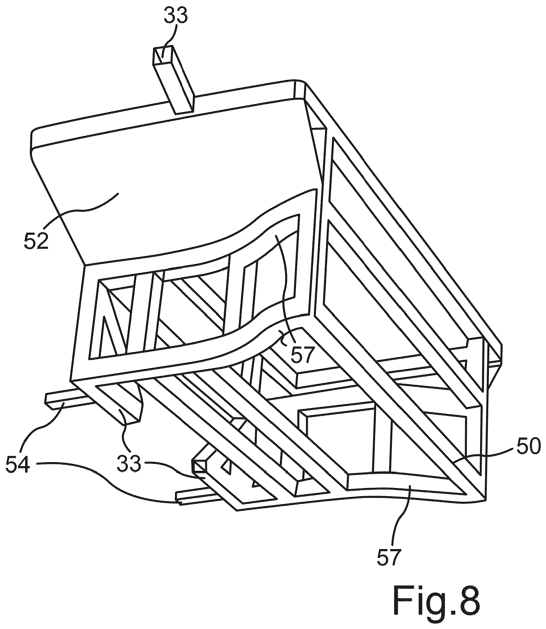

Fig. 8 veranschaulicht noch einmal die Gitterstruktur oder den Gitterrahmen 50 aus einer Perspektive von schräg unten. Dargestellt ist des Weiteren, wie gekrümmte Stangen 57 in der beschriebenen Weise bereitgestellt werden können.

Somit werden modulare Hardware und Softwarekomponenten entwickelt, die an die bestehende Architektur des Basisfahrzeugs "angedockt" werden können. Dies ist ein Einmalaufwand, der für jede weitere Fahrzeugarchitektur jeweils nur angepasst werden muss. Die neu zu verbauenden Komponenten werden entsprechend vereinheitlicht vorbereitet und so im Basisfahrzeug verbaut, dass standardisierte Abläufe und Befestigungspunkte genutzt werden können.

Der elektrische Motor (eMotor) wird standardisiert an den Antrieb angekoppelt und das E-CAN-Modul verbindet die Bestandsbussysteme und Steuergeräte mit den nachträglich verbauten Bussen und Steuergeräten. Entsprechend der standardisierten Motoraufhängung in Fahrzeugen einer Baureihe, wird bevorzugt als Trägerstruktur mit mechanischer Verbindungsschnittstelle ein Standardanbaumodul eingesetzt, das die Haltepunkte übernimmt. In dem Standardanbaumodul werden dann die benötigten Steuergeräte, eMotor und Teile der Hochvoltanlage nach einem prozessorientierten Anordnungsverfahren befestigt.

Bei anderen Fahrzeugmodellen werden die Haltepunkte des Standardanbaumoduls entsprechend an die im Fahrzeug vorhandenen Aufhängungspunkte angepasst, die Anordnung der Steuergeräte, Hochvoltkomponenten und eMotor bleiben im Standardanbaumodul prinzipiell unverändert. Falls erforderlich wird die Anordnung bezüglich der Ausrichtung (Lenks/Quer) und des Bauraums an die Modellreihe angepasst oder eine neue Variante des Standardanbaumoduls generiert, also lediglich eine andere Trägerstruktur bereitgestellt, aber die Bestückungskomponenten bleiben baugleich. Die gleichen Nachrüstkomponenten und Befestigungsmechanismen im jeweiligen Standardanbaumodul werden somit einheitlich verwendet.

Die Lagerhaltung kann effizient erfolgen, da nur wenig unterschiedliche Komponenten/Module vorgehalten werden müssen. Die Module können einheitlich, günstig und in hoher Stückzahl vorgefertigt werden. So können Skaleneffekte erzielt und Kosten gesenkt werden. Die Abnahme durch den technischen Prüfdienst kann durch eine Vorabtypprüfung vereinfacht werden. Eine Eintragung im Fahrzeugschein erfolgt bevorzugt ebenfalls vereinheitlicht. Eine Gewährleistung kann effizienter vereinbart werden, da durch eine Standardisierung der Komponenten individuelle Fehler reduziert werden. Zusätzlich kann bei der Entwicklung intensiver getestet werden da es keine individuellen Varianten gibt. Die Fehleranfälligkeit in der Entwicklung und beim Verbau in der Werkstatt wird durch die Standardisierung stark reduziert. Die hohe Anzahl der genutzten Standardkomponenten verbessert die Einkaufsbedingungen und Qualität. Zentrale Vorfertigung der Standardumbaumodulvarianten und einheitliche Belieferung der Umbauwerkstätten sind möglich.

Dies ergibt ein Standardanbaumodul für erleichterten Umbau eines Verbrennerfahrzeugs mit Standard-Komponenten in kurzer Zeit. Vorgesehen ist die Vorfertigung der Standardanbaumodule mit Anpassungen an die jeweiligen Aufhängungspunkte der Fahrzeugmodellreihen und vorbereiteten Befestigungen für Kabel- bzw. Leitungen sowie die Standardkomponenten. Ein prozessorientierter Einbau ergibt sich durch vorgefertigte einheitliche Module und vorgegebenen Umrüststandards.

Insgesamt zeigen die Beispiele, wie ein Umrüstbausatz für die Massenproduktion und mit pauschaler Zulassung zum Umrüsten eines Kraftfahrzeugs bereitgestellt werden kann.

## Patentansprüche

1. Modulares Bausatzsystem (14) zum Umrüsten eines Fahrantriebs (40) eines Kraftfahrzeugs (10) von einem Antrieb mit Verbrennungsmotor (11) auf einen elektrischen Fahrantrieb (40), aufweisend:
• eine mechanische Trägerstruktur (15) mit einer mechanischen Verbindungsschnittstelle (33) zum Befestigen der Trägerstruktur (15) in einem Motorraum (12) des Kraftfahrzeugs (10) anstelle des Verbrennungsmotors (11);
• elektrische Bestückungskomponenten (16) zum Bestücken der Trägerstruktur (15), wobei eine jeweilige Kombination zumindest einiger der Bestückungskomponenten (16) insgesamt eine jeweilige Antriebsvariante des elektrischen Fahrantriebs (40) ergibt, wobei
die Trägerstruktur (15) Bestückungsplätze (28) zum Befestigen jeweils einer der Bestückungskomponenten (16) in oder an der Trägerstruktur (15) aufweist und der jeweilige Bestückungsplatz jeweils in Bezug auf eine Geometrie, worunter eine Form und/oder eine Befestigungseinrichtung zu verstehen ist, korrespondierend mit der Geometrie eines Befestigungsbereichs der zugehörigen Bestückungskomponente (16), für die der jeweilige Befestigungsplatz vorgesehen ist, ausgestaltet ist,
wobei
für einen Einbauraum eines Kraftstofftanks und/oder einen Kofferraum des Kraftfahrzeugs (10) eine Energiespeichereinheit bereitgestellt ist, die Einbauplätze für Batteriemodule (25) aufweist, wobei eine elektrische Verbindungseinrichtung vorgesehen ist,
**dadurch gekennzeichnet, dass** die elektrische Verbindungseinrichtung sowohl bei Vollbestückung als auch bei Teilbestückung der Einbauplätze der Energiespeichereinheit mit Batteriemodulen (25) jeweils eine elektrische Verbindung zu dem elektrischen Fahrantrieb (40) bereitstellt,
sodass es dadurch, dass die Verbindungseinrichtung dazu eingerichtet ist, variabel sowohl die elektrische Verbindung bei Vollbestückung als auch bei Teilbestückung bereitzustellen, möglich ist, zunächst eine Energiespeichereinheit mit geringerer Speicherkapazität durch Teilbestückung der Einbauplätze anzuschaffen und zu einem späteren Zeitpunkt dann weitere Batteriemodule (25) hinzu zu kaufen, um die Vollbestückung oder eine erweiterte Teilbestückung zu erhalten.

2. Bausatzsystem (14) nach Anspruch 1, wobei durch die Bestückungskomponenten (16) bereitgestellt ist:
• von zumindest einem Maschinenmodell (18') jeweils zumindest eine elektrische Maschine (18) oder
• von zumindest einem Aggregattyp jeweils zumindest ein Zusatzaggregat (23) zum Betreiben der zumindest einen elektrischen Maschine (18) oder
• von zumindest einem Maschinenmodell (18') jeweils zumindest eine elektrische Maschine (18) und von zumindest einem Aggregattyp jeweils zumindest ein Zusatzaggregat (23) zum Betreiben der zumindest einen elektrischen Maschine (18),
und
in oder an der Trägerstruktur (15) für jedes Maschinenmodell (18') und/oder für jeden Aggregattyp jeweils zumindest ein Bestückungsplatz bereitgestellt ist, wobei insbesondere unterschiedliche Maschinenmodelle (18') als jeweilige Alternative für unterschiedliche Antriebsvarianten zum alternativen Bestücken vorgesehen sind.

3. Bausatzsystem (14) nach Anspruch 2, wobei zumindest einer der folgenden Aggregattypen vorgesehen ist: eine Leistungselektronik (19), ein elektrischer Energiespeicher zum Speichern von Antriebsenergie, ein Ladegerät, ein Steuergerät (22), eine Unterdruckpumpe, eine Klimakompressor, ein Heizaggregat.

4. Bausatzsystem (14) nach einem der vorhergehenden Ansprüche, wobei die mechanische Verbindungsschnittstelle (33) der Trägerstruktur (15) einer mechanischen Verbindungsschnittstelle (33) für einen vorbestimmten Karosserietyp des Kraftfahrzeuges (10) entspricht, indem die Verbindungsschnittstelle (33) insbesondere ein jeweiliges Verbindungselement für zumindest ein Motorlager und/oder für zumindest eine Motorlagerstrebe und/oder für zumindest einen Hydromount aufweist.

5. Bausatzsystem (14) nach einem der vorhergehenden Ansprüche, wobei von zumindest einem Adaptertyp jeweils zumindest ein Adapter (27) zum mechanischen und/oder elektrischen Anpassen zumindest einer der Bestückungskomponenten (16) an eine jeweilige vorbestimmte Bestandskomponente des Kraftfahrzeugs (10) vorgesehen ist.

6. Bausatzsystem (14) nach Anspruch 5, wobei als Adaptertyp zumindest einer der folgenden vorgesehen ist:
• ein Flansch zum Verbinden des elektrischen Fahrantriebs (40) an ein Schaltgetriebe (13) oder ein Automatikgetriebe (13) des Kraftfahrzeugs (10)
• ein elektrisches Abschlusselement zum Ersetzen einer insbesondere zusammen mit dem Verbrennungsmotor (11) entfernten elektrischen Komponente an einem Kabelende eines Kabels des Kraftfahrzeugs (10)
• eine Simulationsschaltung zum Simulieren einer insbesondere mit dem Verbrennungsmotor (11) entfernten elektrischen Komponente während eines Betriebs des elektrischen Fahrantriebs (40) nach der Umrüstung
• ein Riemengetriebe (13) zum Koppeln eines Klimakompressors mit der in der Trägerstruktur (15) eingebauten elektrischen Maschine (18),
• ein Adapter (27) zu einem Kühlsystem.

7. Bausatzsystem (14) nach einem der vorhergehenden Ansprüche, wobei die Trägerstruktur (15) vollständig oder teilweise als Gitterrahmen (50) mit zumindest einer Gitterstange ausgestaltet ist.

8. Bausatzsystem (14) nach Anspruch 7, wobei der Gitterrahmen (50) zumindest eine gewölbte Stange und/oder zumindest eine Stange mit entlang ihrer Längserstreckungsrichtung (56) veränderlich ausgestalteter Wandstärke und/oder Durchmesser und/oder zumindest eine Stange mit einer strukturellen Schwächungsstelle aufweist.

9. Bausatzsystem (14) nach einem der vorhergehenden Ansprüche, wobei sich bei der Trägerstruktur (15) durch einen Bestückungsplatz für eine elektrische Maschine (18) des elektrischen Fahrantriebs (40) eine vorbestimmte, räumliche Ausrichtung einer Rotationsachse (55) eines Rotors der elektrischen Maschine (18) vorgegeben ist und die Trägerstruktur (15) zumindest ein Abstützelement (54) aufweist, das quer oder schräg zu dieser räumlichen Ausrichtung der Rotationsachse (55) von der Trägerstruktur (15) absteht, um insbesondere als Momentenstütze im Motorraum (12) aufzuliegen und/oder anzuliegen.

10. Trägerstruktur (15) für ein Bausatzsystem (14) nach einem der vorhergehenden Ansprüche, wobei die Trägerstruktur (15) eine mechanische Verbindungsschnittstelle (33) zum Befestigen der Trägerstruktur (15) in einem Motorraum (12) eines Kraftfahrzeugs (10) eines vorbestimmten Karosserietyps und Bestückungsplätze (28) zum Befestigen jeweils einer Bestückungskomponente (16) in oder an der Trägerstruktur (15) aufweist, wobei der jeweilige Bestückungsplatz für die jeweilige Bestückungskomponente (16), für die der jeweilige Befestigungsplatz vorgesehen ist, jeweils zum Anbringen, worunter ein Anlegen und/oder ein Einrasten zu verstehen ist, der Bestückungskomponente (16) geformt ist und/oder eine Befestigungseinrichtung zum Befestigen der Bestückungskomponente (16) aufweist.

11. Trägerstruktur (15) nach Anspruch 10, wobei in Trägerstruktur (15) einen Verlegepfad (24) für ein Hochvoltkabel einerseits und einen Verlegepfad (24) für ein Datenkabel und/oder für ein Kabel einer Niedervoltkomponente andererseits aufweist, wobei die Verlegepfade (24) durchgehend um einen vorbestimmten Entstörabstand räumlich beabstandet angeordnet sind.

12. Kraftfahrzeug (10) mit einem elektrischen Fahrantrieb (40) aus einem Bausatzsystem (14) nach einem der Anspräche 1 bis 11 oder mit einer Trägerstruktur (15) nach Anspruch 10 oder 11 im Motorraum (12).

13. Kraftfahrzeug (10) nach Anspruch 12, wobei zum Erhalt eines Fußgängerschutzes im geschlossenen Zustand einer Motorhaube des Kraftfahrzeugs (10) die Trägerstruktur (15) zu der darüber angeordneten, geschlossenen Motorhaube einen Mindestabstand aufweist, der insbesondere mehr als 1 cm, bevorzugt mehr als 2 cm, beträgt.

14. Verfahren zum Umrüsten eines Kraftfahrzeugs (10) mittels eines Bausatzsystems (14) gemäß einem der vorhergehenden Ansprüche, **dadurch gekennzeichnet, dass** die folgenden Schritte ausgeführt werden:
• in Abhängigkeit von einem Hersteller und/oder Karosserietyp des Kraftfahrzeugs (10) Ermitteln des Bausatzsystems (14) mit der für den Motorraum (12) des Kraftfahrzeugs (10) passenden Trägerstruktur (15),
• in Abhängigkeit von einer Benutzerauswahl (17) einer Antriebsvariante Auswählen (17) von Bestückungskomponenten (16) für die ausgewählte Antriebsvariante aus dem Bausatzsystem (14),
• Bestücken der Trägerstruktur (15) mit den ausgewählten Bestückungskomponenten (16), wobei das Bestücken durch Befestigen der ausgewählten Bestückungskomponenten (16) an einem jeweiligen für sie vorgesehenen Bestückungsplatz an und/oder in der Trägerstruktur (15) erfolgt,
• Entfernen zumindest des Verbrennungsmotors (11) aus dem Motorraum (12) des Kraftfahrzeugs (10),
• Einbauen der Trägerstruktur (15) in den Motorraum (12) anstelle des Verbrennungsmotors (11), wobei das Einbauen im unbestückten oder teilbestückten oder vollbestückten Zustand (26, 35) der Trägerstruktur (15) erfolgt.

## Claims

1. A modular kit system (14) for retrofitting a traction drive (40) of a motor vehicle (10) from a drive comprising an internal combustion engine (11) to an electric traction drive (40), comprising:
• a mechanical support structure (15) comprising a mechanical connection interface (33) for fastening the support structure (15) in an engine compartment (12) of the motor vehicle (10) instead of the internal combustion engine (11);
• electrical equipment components (16) for equipping the support structure (15), a respective combination of at least some of the equipment components (16) overall resulting in a respective drive variant of the electric traction drive (40),
the support structure (15) comprising equipment locations (28) for fastening each one of the equipment components (16) in or to the support structure (15) and each equipment point being configured with respect to a geometry, which is to be understood as a shape and/or a fastening device, corresponding to the geometry of a fastening region of the associated equipment component (16) for which the respective fastening location is provided,
an energy storage unit being provided for an installation space for a fuel tank and/or a luggage compartment of the motor vehicle (10) and comprising plug-in locations for battery modules (25), an electrical connection device being provided, **characterized in that** the electrical connection device provides an electrical connection to the electric traction drive (40) both when the plug-in locations of the energy storage unit are fully equipped and partially equipped with battery modules (25), such that, because the connection device is configured to variably provide the electrical connection both when the plug-in locations are fully equipped and partially equipped, it is possible to first acquire an energy storage unit having a low storage capacity owing to the plug-in locations being partially equipped, and then to additionally purchase further battery modules (25) at a later point of time in order to fully equip or further partially equip the plug-in locations.

2. The kit system (14) according to claim 1, wherein the following is provided by the equipment components (16):
• at least one electric machine (18) is provided by at least one machine model (18') in each case or
• at least one additional unit (23) for operating the at least one electric machine (18) is provided by at least one unit type in each case or
• at least one electric machine (18) is provided by at least one machine model (18') in each case and at least one additional unit (23) for operating the at least one electric machine (18) is provided by at least one unit type in each case, and
at least one equipment location is provided in or on the support structure (15) for each machine model (18') and/or for each unit type in each case, different machine models (18') in particular being provided as respective alternatives for different drive variants for alternative equipment options.

3. The kit system (14) according to claim 2, wherein at least one of the following unit types is provided: power electronics (19), an electrical energy store for storing drive energy, a charging device, a control device (22), a negative pressure pump, an air conditioning compressor, and a heating unit.

4. The kit system (14) according to any of the preceding claims, wherein the mechanical connection interface (33) of the support structure (15) corresponds to a mechanical connection interface (33) for a predetermined body type of the motor vehicle (10) in that the connection interface (33) in particular comprises a respective connection element for at least one engine mount and/or for at least one engine mount strut and/or for at least one hydromount.

5. The kit system (14) according to any of the preceding claims, wherein at least one adapter (27) for mechanically and/or electrically adapting at least one of the equipment components (16) to a respective predetermined existing component of the motor vehicle (10) is provided by at least one adapter type in each case.

6. The kit system (14) according to claim 5, wherein at least one of the following is provided as the adapter type:
• a flange for connecting the electric traction drive (40) to a manual transmission (13) or an automatic transmission (13) of the motor vehicle (10)
• an electrical terminating element for replacing an electrical component that has in particular been removed together with the internal combustion engine (11) at a cable end of a cable of the motor vehicle (10)
• a simulation circuit for simulating an electrical component that has in particular been removed together with the internal combustion engine (11) during operation of the electric traction drive (40) after the retrofitting
• a belt drive (13) for coupling an air conditioning compressor to the electric machine (18) installed in the support structure (15)
• an adapter (27) to a cooling system.

7. The kit system (14) according to any of the preceding claims, wherein the support structure (15) is completely or partially configured as a space frame (50) comprising at least one bar.

8. The kit system (14) according to claim 7, wherein the space frame (50) comprises at least one curved bar and/or at least one rod having a wall thickness and/or diameter configured to be variable in its longitudinal direction of extension (56) and/or at least one bar having a structural point of weakness.

9. The kit system (14) according to any of the preceding claims, wherein a predetermined, spatial orientation of an axis of rotation (55) of a rotor of the electric machine (18) is predefined in the support structure (15) by an equipment location for an electric machine (18) of the electric traction drive (40) and the support structure (15) comprises at least one bracing element (54), which protrudes from the support structure (15) transversely or obliquely to this spatial orientation of the axis of rotation (55), in order to in particular rest on and/or abut the engine compartment (12) as a torque support.

10. A support structure (15) for a kit system (14) according to any of the preceding claims, wherein the support structure (15) comprises a mechanical connection interface (33) for fastening the support structure (15) in an engine compartment (12) of a motor vehicle (10) of a predetermined body type and equipment locations (28) each for fastening one equipment component (16) in or to the support structure (15), wherein the respective equipment location for the respective equipment component (16), for which the respective fastening location is intended, is shaped for affixing, understood to mean attaching and/or latching in, the equipment component (16) and/or comprises a fastening device for fastening the equipment component (16).

11. The support structure (15) according to claim 10, wherein the support structure (15) comprises a laying path (24) for a high-voltage cable on one hand and a laying path (24) for a data cable and/or for a cable of a low-voltage component on the other hand, wherein the laying paths (24) are arranged continuously so as to be spaced apart by a predetermined interference suppression distance.

12. A motor vehicle (10) comprising an electric traction drive (40) made up of a kit system (14) according to any of claims 1 to 11 or comprising a support structure (15) according to claim 10 or 11 in the engine compartment (12).

13. The motor vehicle (10) according to claim 12, wherein, to obtain pedestrian protection when a hood of the motor vehicle (10) is closed, the support structure (15) has a minimum distance from the closed hood arranged thereabove which is in particular more than 1 cm, preferably more than 2 cm.

14. A method for retrofitting a motor vehicle (10) by means of a kit system (14) according to any of the preceding claims, **characterized in that** the following steps are performed:
• depending on a manufacturer and/or body type of the motor vehicle (10), ascertaining the kit system (14) comprising the suitable support structure (15) for the engine compartment (12) of the motor vehicle (10),
• depending on a user selection (17) of a drive variant, selecting (17) equipment components (16) for the selected drive variant from the kit system (14),
• equipping the support structure (15) with the selected equipment components (16), this equipping being carried out by fastening the selected equipment components (16) to a respective equipment location intended therefor on and/or in the support structure (15),
• removing at least the internal combustion engine (11) from the engine compartment (12) of the motor vehicle (10),
• installing the support structure (15) in the engine compartment (12) instead of the internal combustion engine (11), this installation being carried out in the non-equipped or partially equipped or fully equipped state (26, 35) of the support structure (15).

## Revendications

1. Système d'assemblage modulaire (14) servant à faire passer le système de propulsion (40) d'un véhicule à moteur (10) d'un système à moteur à combustion interne (11) à un système de propulsion électrique (40), comprenant :
• une structure de support (15) mécanique dotée d'une interface de liaison mécanique (33) destinée à fixer la structure de support (15) dans un compartiment moteur (12) du véhicule à moteur (10) en lieu et place du moteur à combustion interne (11) ;
• des composants d'équipement (16) électriques destinés à équiper la structure de support (15), une combinaison respective d'au moins certains des composants d'équipement (16) constituant une variante respective du système de propulsion électrique (40),
la structure de support (15) comportant des emplacements d'équipement (28) destinés à fixer respectivement l'un des composants d'équipement (16) dans ou sur la structure de support (15), et chaque emplacement d'équipement étant conçu de manière à ce que sa géométrie - c'est-à-dire sa forme et/ou son dispositif de fixation - corresponde à la géométrie d'une zone de fixation du composant d'équipement (16) associé, pour lequel l'emplacement de fixation respectif est prévu,
une unité de stockage d'énergie étant prévue pour être installée dans l'espace de montage d'un réservoir de carburant et/ou un coffre du véhicule à moteur (10), laquelle comporte des emplacements de montage pour des modules de batterie (25), un dispositif de liaison étant prévu,
**caractérisé en ce que** le dispositif de liaison électrique assure, tant en cas d'équipement complet qu'en cas d'équipement partiel des emplacements de montage de l'unité de stockage d'énergie avec des modules de batterie (25), une liaison électrique respective vers le système de propulsion électrique (40),
de sorte que, le dispositif de liaison étant conçu pour établir de manière sélective la liaison électrique aussi bien en cas d'équipement complet qu'en cas d'équipement partiel, il est possible d'acquérir dans un premier temps une unité de stockage d'énergie de capacité réduite en n'équipant qu'une partie des emplacements de montage, puis d'ajouter ultérieurement d'autres modules de batterie (25) afin d'obtenir un équipement complet ou un équipement partiel étendu.

2. Système d'assemblage (14) selon la revendication 1, dans lequel les composants d'équipement (16) comprennent :
• pour chaque modèle de machine (18') au moins une machine électrique (18) ou
• pour chaque type d'agrégat, au moins un agrégat supplémentaire (23) destiné à faire fonctionner l'au moins une machine électrique (18), ou
• pour chaque modèle de machine (18'), au moins une machine électrique (18) et, pour chaque type d'agrégat, au moins un agrégat supplémentaire (23) destiné à faire fonctionner l'au moins une machine électrique (18),
et
au moins un emplacement d'équipement est prévu dans ou sur la structure de support (15) pour chaque modèle de machine (18') et/ou pour chaque type d'agrégat, différents modèles de machine (18') étant notamment prévus comme alternatives respectives pour différentes variantes d'entraînement destinés à être montés alternativement.

3. Système d'assemblage (14) selon la revendication 2, dans lequel au moins l'un des types d'agrégats suivants est prévu : une électronique de puissance (19), une unité de stockage d'énergie électrique destinée à stocker de l'énergie d'entraînement, un chargeur, un appareil de commande (22), une pompe à vide, un compresseur de climatisation, un dispositif de chauffage.

4. Système d'assemblage (14) selon l'une des revendications précédentes, dans lequel l'interface de liaison (33) mécanique de la structure de support (15) est conforme à une interface de liaison (33) mécanique destinée à un type de carrosserie du véhicule à moteur (10), l'interface de liaison (33) comportant notamment un élément de liaison correspondant pour au moins un support de moteur et/ou pour au moins une entretoise de support de moteur et/ou pour au moins un support hydraulique.

5. Système d'assemblage (14) selon l'une des revendications précédentes, dans lequel, pour au moins un type d'adaptateur, il est prévu au moins un adaptateur (27) pour l'adaptation mécanique et/ou électrique d'au moins l'un des composants d'équipement (16) à un composant existant prédéterminé du véhicule à moteur (10).

6. Système d'assemblage (14) selon la revendication 5, dans lequel, parmi les types d'adaptateurs, au moins l'un des éléments suivants est prévu :
• une bride pour relier le système de propulsion électrique (40) à une boîte de vitesses manuelle (13) ou une boîte de vitesses automatique (13) du véhicule à moteur (10)
• un élément de terminaison électrique destiné à remplacer un composant électrique, notamment celui qui a été retiré en même temps que le moteur à combustion interne (11), à l'extrémité d'un câble du véhicule à moteur (10)
• un circuit de simulation destiné à simuler un composant électrique, notamment celui qui a été retiré avec le moteur à combustion interne (11), pendant le fonctionnement du système de propulsion électrique (40) après la conversion
• une transmission par courroie (13) destinée à coupler un compresseur de climatisation à la machine électrique (18) intégrée dans la structure de support (15),
• un adaptateur (27) pour un système de refroidissement.

7. Système d'assemblage (14) selon l'une des revendications précédentes, dans lequel la structure de support (15) est constituée entièrement ou partiellement d'un cadre en treillis (50) comportant au moins une barre de treillis.

8. Système d'assemblage (14) selon la revendication 7, dans lequel le cadre en treillis (50) comporte au moins une barre courbée et/ou au moins une barre dont l'épaisseur de paroi et/ou le diamètre varient le long de sa direction longitudinale (56) et/ou au moins une barre présentant un point d'affaiblissement structurel.

9. Système d'assemblage (14) selon l'une des revendications précédentes, dans lequel, au niveau de la structure de support (15), un emplacement d'équipement pour une machine électrique (18) du système de propulsion électrique (40) définit une orientation spatiale prédéterminée d'un axe de rotation (55) d'un rotor de la machine électrique (18) et la structure de support (15) comporte au moins un élément d'appui (54) qui fait saillie de la structure de support (15) transversalement ou obliquement par rapport à cette orientation spatiale de l'axe de rotation (55), afin notamment de reposer et/ou de s'appuyer en tant que support de couple dans le compartiment moteur (12).

10. Structure de support (15) pour un système d'assemblage (14) selon l'une des revendications précédentes, la structure de support (15) comportant une interface de liaison mécanique (33) destinée à fixer la structure de support (15) dans un compartiment moteur (12) d'un véhicule à moteur (10) d'un type de carrosserie prédéterminé, ainsi que des emplacements d'équipement (28) destinés à fixer, respectivement, un composant d'équipement (16) dans ou sur la structure de support (15), l'emplacement de fixation respectif étant configuré, pour le composant d'équipement (16) respectif, pour lequel l'emplacement de fixation correspondant est prévu, pour la mise en place - c'est-à-dire l'appui et/ou l'enclenchement - du composant d'équipement (16) et/ou comporte un dispositif de fixation destiné à fixer le composant d'équipement (16).

11. Structure de support (15) selon la revendication 10, dans laquelle la structure de support (15) comporte, d'une part, un chemin de câblage (24) pour un câble haute tension et, d'autre part, un chemin de câblage (24) pour un câble de données et/ou pour un câble d'un composant basse tension d'autre part, les chemins de câblage (24) étant disposés de manière continue à une distance d'écartement antiparasite prédéterminée les uns des autres.

12. Véhicule à moteur (10) comprenant un système de propulsion électrique (40) issu d'un système d'assemblage (14) selon l'une des revendications 1 à 11 ou comprenant une structure de support (15) selon la revendication 10 ou 11 dans le compartiment moteur (12).

13. Véhicule à moteur (10) selon la revendication 12, dans lequel, afin d'assurer la protection des piétons lorsque le capot du véhicule à moteur (10) est fermé, la structure de support (15) présente, par rapport au capot fermé disposé au-dessus, une distance minimale qui est notamment supérieure à 1 cm, de préférence supérieure à 2 cm.

14. Procédé de transformation d'un véhicule à moteur (10) à l'aide d'un système d'assemblage (14) selon l'une des revendications précédentes, **caractérisé en ce que** les étapes suivantes sont exécutées :
• en fonction du constructeur et/ou du type de carrosserie du véhicule à moteur (10), déterminer le système d'assemblage (14) comportant la structure de support (15) adaptée au compartiment moteur (12) du véhicule à moteur (10),
• en fonction d'un choix (17) effectué par l'utilisateur concernant une variante de propulsion, sélectionner (17) des composants d'équipement (16) pour la variante de propulsion choisie à partir du système d'assemblage (14),
• équiper la structure de support (15) avec les composants d'équipement (16) sélectionnés, l'équipement s'effectuant par la fixation des composants d'équipement (16) sélectionnés à un emplacement d'équipement respectif prévu à cet effet sur et/ou dans la structure de support (15),
• retirer au moins le moteur à combustion interne (11) du compartiment moteur (12) du véhicule à moteur (10),
• installer la structure de support (15) dans le compartiment moteur (12) en lieu et place du moteur à combustion interne (11), l'installation s'effectuant à l'état non équipé, partiellement équipé ou entièrement équipé (26, 35) de la structure de support (15).
